# EUROPEAN PATENT APPLICATION

(11) **EP 4 614 392 A2**
(43) Date of publication of application: **10.09.2025**
(21) Application number: 25161954.0
(22) Date of filing: 05.03.2025
(51) Int. Cl.: G06N 3/048, G06N 3/063

(54) **ARTIFICIAL NEURAL NETWORK**

(30) Priority: 08.03.2024 US 202418599980
(71) Applicant: Cyberswarm, Inc, San Mateo, California 94401 (US)
(72) Inventor: DUCA, Elena-Adelina, San Mateo, 94401 (US); ILIESCU, Andrei, San Mateo, 94401 (US); DUMITRU, Viorel-Georgel, San Mateo, 94401 (US); GEANA-ARMSTRONG, Andra, San Mateo, 94401 (US)
(74) Representative: Korenberg, Alexander Tal

(57) **Abstract**

A neural network system is provided. The neural network system may include an input layer configured to receive an input signal. The neural network system may also include a first set of weights downstream of the input layer. The neural network system may further include a second set of weights downstream of the input layer, the second set of weights being connected by a mathematical relationship to the first set of weights. The neural network system may additionally include an output layer, downstream of the first set of weights and the second set of weights and configured to generate an output signal in response to the input signal.

## Description

### CROSS REFERENCE TO RELATED APPLICATIONS

This application is based on and derives the benefit of the filing date of United States Patent Application No., 18/599,980 filed March 8, 2024. This application is related to U.S. Patent No. 10,902,914, entitled "Programmable resistive memory element and a method of making the same," filed June 4, 2019, and issued January 26, 2021, which is hereby incorporated by reference in its entirety. This application is also related to U.S. Patent No. 11,183,240, entitled "Programmable resistive memory element and a method of making the same," filed January 26, 2021, and issued November 23, 2021, which is also hereby incorporated by reference in its entirety. This application is also related to U.S. Patent Application No. 18/048,594, entitled "Analog programmable resistive memory," filed October 21, 2022, which is also hereby incorporated by reference in its entirety.

### BACKGROUND

An artificial neural network is a computational model that mimics the behavior of the human brain. Such a network learns from data, and, based on the learning, predicts or recognizes specific patterns. To obtain a network with these properties, large quantity of data is needed for training and analysis, which consumes a large amount of computational power. With the advent of new algorithms that are more power-hungry, the need to find more efficient networks is highly desirable. One solution is to construct such networks at the hardware level, but such networks have so far proven complex to adapt to the flexibility afforded by networks constructed at the software level. For example, negative weights are difficult to implement in hardware-based neural networks. This difficulty can be avoided by implementing some steps at the hardware level and others at the software level. But such implementations using conventional techniques cause undesirable latency.

As such, a significant improvement in neural networks and neural network systems is desired.

### SUMMARY

Embodiments disclosed herein solve the aforementioned technical problems and may provide other solutions as well. In one or more embodiments, an artificial neural network system is formed with at least two sets of weights for each layer, the two sets of weights being connected by a mathematical relationship involving one input layer and one output layer The input layer consists of any type of pattern, including but not limited to, image patterns, video patterns, audio patterns, text patterns, and/or any type of organized information, in raw format or preprocessed through a mathematical transformation of the raw pattern. In one embodiment, the network output layer is formed by neurons having two components, one behaving like an excitatory one and another behaving like an inhibitory one. In another embodiment, the network the output layer contains two neurons, each neuron having two components, one behaving like an excitatory one and another behaving like an inhibitory one.

In another embodiment, the values of the weights of the artificial neural network may be adjusted via a suitable algorithm. For example, an input pattern may be sent via the input layer and the output that is produced by that pattern may be compared with the desired output with a suitable algorithm. Then, the weights for each input neuron can be adjusted according to the algorithm such that the system would eventually identify the desired pattern. In other embodiments, the weights can be restricted to be positive values. In other embodiments, the weights can be further restricted to be between 0 and 1 such that it is easier to map the values of a memristor crossbar.

In some other embodiments, the artificial neural network is formed with at least one hidden layer, for implementing more complex behavior. In such cases, the artificial neural network may be able to identify more complex pattens, predict and learn from large quantities of data. In such cases, the internal structure of a hidden layer may be similar to the structure of the output layer, but the hidden layer being able to identify certain features of a pattern such that the system would identify easier the desired pattern.

In another embodiment, the artificial neural network can be implemented at the software level as well as at the hardware level. When implemented at the hardware level, the system comprises of at least one memristor crossbar and artificial neurons built with electronic components. In one or more embodiments, the values of the resistances of the memristors from the crossbar may be modified to represent the weights of an artificial neural network trained in advanced. In other embodiments, the training of the weights can be done directly on the hardware artificial neural network. For example, an input pattern may be sent via the input layer and the output that is produced by that pattern may be compared with the desired output with a suitable algorithm. Then, the values of the resistances can be adjusted accordingly to the algorithm such that the system would eventually identify the desired pattern.

In one or more embodiments, a neural network system may be provided. The neural network system may include an input layer configured to receive an input signal and a first set of weights and a second set of weights downstream of the input layer. The second set of weights may be connected by a mathematical relationship with the first set of weights. The neural network system may further include an output layer downstream of the first set of weights and the second set of weights. The output layer may be configured to generate an output signal in response to the input signal. In some embodiments, the output layer may be configured to act as a hidden layer in the network, its output signal acting as the input signal for the next layer in the network.

In one or more embodiments, a method of training a memristors based neural network system is provided. The method may include providing inputs to a software system and retrieving corresponding outputs. The method may further include comparing the corresponding outputs to an expected output. The method may also include adjusting weights in the software system until the corresponding outputs are within a predetermined distance of an expected output. The method may additionally include. mapping the weights to a memristor crossbar of the memristors based neural network system.

In one or more embodiments, a method of training a memristors based neural network system is provided. The method may include providing inputs to the memristors based neural network system and retrieving corresponding outputs. The method may also include comparing the corresponding outputs to an expected output. The method may further include adjusting resistances of a memristor crossbar of the memristors based neural network system until the corresponding outputs are within a predetermined distance of the expected output.

### BRIEF DESCRIPTION OF THE DRAWINGS

FIG 1 depicts an example of a neural network system, based on the principles disclosed herein.
FIG 2 depicts an example of a neural network system, based on the principles disclosed herein.
FIG 3 depicts an example of a neural network system, based on the principles disclosed herein.
FIG 4 depicts an example of a neural network system, , based on the principles disclosed herein
FIG 5 depicts an example of an internal structure of a hidden layer of a neural network system, based on the principles disclosed herein.
FIG. 6 depicts a flow diagram of an example method of training a memristors based neural network system, based on the principles disclosed herein.
FIG. 7 depicts a flow diagram of an example method of training a memristors based neural network system, based on the principles disclosed herein.

### DETAILED DESCRIPTION

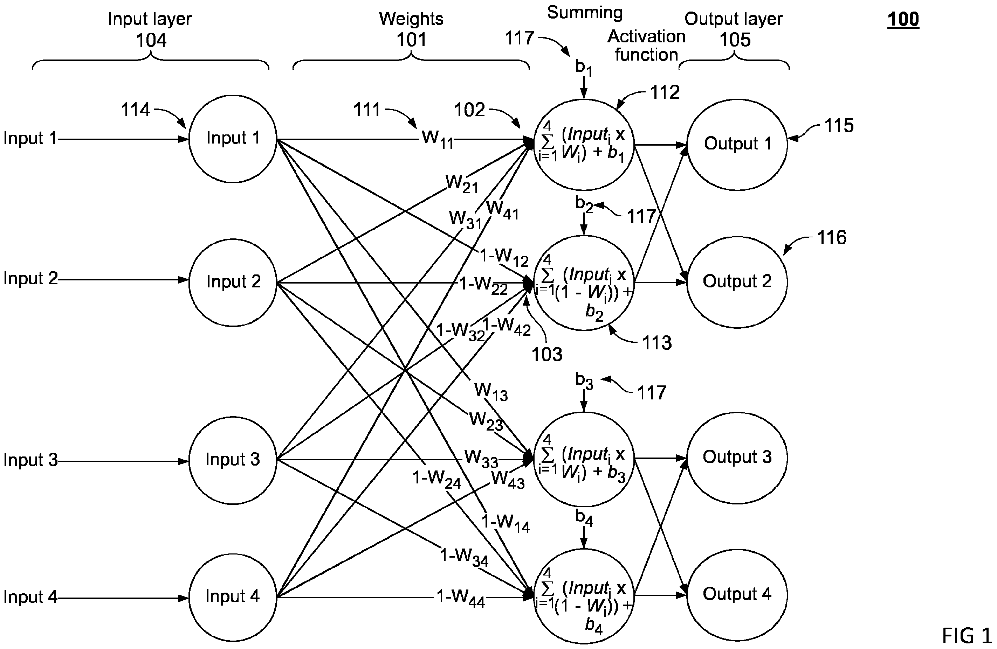

FIG 1 depicts an example of a neural network system 100, based on the principles disclosed herein. It should be understood that the neural network system 100 is provided as an example and should not be considered limiting. That is, neural network systems with additional, alternative, or fewer components should be considered within the scope of this disclosure. The neural network system 100 may form one or more layers of a larger, neural network-based system. The neural network system 100 may be implemented on software and/or hardware levels.

As shown, the neural network system 100 incorporates a layer of weights 101 comprising a first set of weights (W) 102 converging on a neuron 112 and a second set of weights (1-W) 103 converging on a neuron 113. That is, the first set of weights 102 are complementary to the second set of weights 103 (i.e., W and 1-W complement each other). The sets of weights 102, 103 are formed by corresponding connections 111. The neurons 112, 113 perform mathematical operations based on the sets of weights 102, 103, respectively, and corresponding biases (b) 117. The neural network system 100 further incorporates an input layer 104 formed by input neurons 114 and output layer 105 formed by output neurons 115, 116. The output neurons 115, 116 interface with the neurons 112, 113.

The input layer 104 may receive any type of pattern, including but not limited to, image patterns, video patterns, audio patterns, text patterns, and/or any type of organized information. In one or more embodiments, the input may be in raw format. In one or more embodiments, the input may be mathematical transformation of the raw format. The output layer 105 may generate a label for the received pattern, where the label indicates an identification of that specific pattern by the neural network system 100. In one or more embodiments, the input may be in a form of an input signal.

In one or more embodiments the layer of weights 101 could be trained using an algorithm, e.g., backpropagation, for identifying a pattern from a set of inputs (e.g., images). By inputting a pattern via the input layer 104 and comparing the output of neural network system 100 with the desired label, the weights 101 can be adjusted, e.g., by backpropagating the errors, such that the neural network system 100 learns to eventually identify the pattern. It should be understood that backpropagation is just an example, and any algorithm that adjusts the layer of weights 101 such that the neural network system 100 may be able to predict, identify or learn from the input data/pattern could be used.

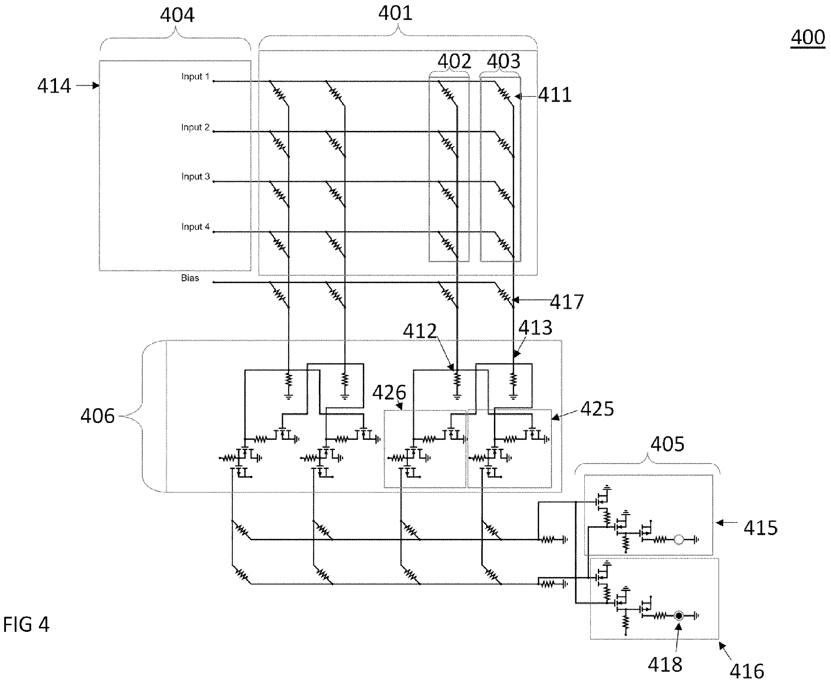

The weights 102, 103 may have positive or negative values. In some embodiments with hardware implementations, the weights 102, 103 may have only positive values. One or more values of the weights 102, 103 may be scaled between a minimum value and a maximum value. In some embodiments, the minimum value could be 0 and the maximum value could be 1. Such scaling may facilitate the mapping of the weights 102, 103 on a hardware system as described with reference to FIG 4 below.

In one or more embodiments, the neurons 112, 113 may perform the summing of the weights 102, 103 multiplied by the input neurons 114 and the corresponding biases 117. That is, as an example of applying mathematical operations described above, the neuron 112 may be updated by the sum of the weights 102 multiplied by the input neurons 114, and the neuron 113 may be the sum of the weights 103 multiplied by the input neurons 114. And, the corresponding biases 117 may be added to each of the neurons 112, 113.

As such, an activation function may be performed with the neurons 112,113 to obtain the corresponding values in the output neurons 115, 116 forming the output layer 105 downstream of the input layer 104. In one or more embodiments, the neuron 112 may form an excitatory component and the neuron 113 may form an inhibitory component for a first activation function for the output neuron 115. In one or more embodiments, the neuron 112 may form an inhibitory component and the neuron 113 may form an excitatory component for a second activation function for the output neuron 116. In one or more embodiments, the value of the output neuron 116 may be complementary to the value of the output neuron 115.In one or more embodiments, the outputs may be in the form output signals.

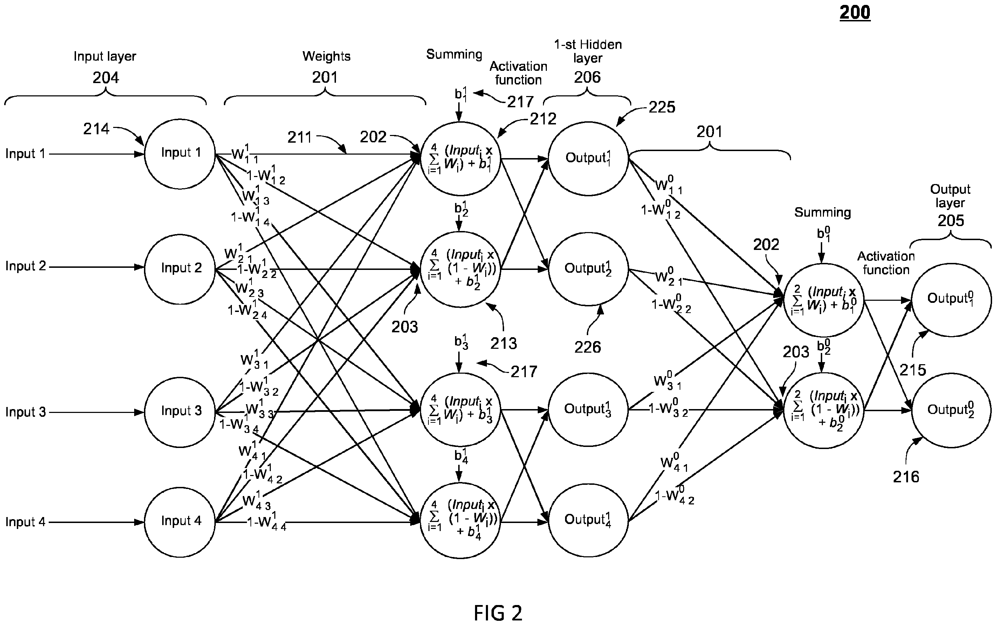

FIG 2 depicts an example of a neural network system 200, based on the principles disclosed herein. The neural network system 200 may be implemented at software and/or hardware levels. As shown, the neural network system 200 incorporates two layers of weights 201 each comprising a first set of weights (e.g., W) 202, and a second set of weights (e.g., 1-W) 203, both of which may be formed by corresponding connections 211. The neural network system 200 incorporates input layer 204 formed by input neurons 214 and output layer 205 formed by output neurons 215,216. The neural network system 200 comprises a hidden layer 206 formed by hidden neurons 225,226.

In one or more embodiments, the neural network system 200 may be formed by incorporating two neural network systems 100, with each constituent neural network system 100 having different trained weights for recognizing a pattern and with different sizes of the layers. For example, the system formed by input layer 204, the set of weights 201, the summing neurons 212, 213 and the hidden layer 206 (forming an output layer) may be considered a first system 100. The system formed by the hidden layer 206, the set of weights 201, and the output layer 205 with their corresponding summing neurons may form another system 100, where the input layer is formed by the hidden layer 206.

In this setup, the input neurons 214 may receive any type of pattern, including but not limited to, image patterns, video patterns, audio patterns, text patterns, and/or any type of organized information. In one or more embodiments, the input may be in raw format. In one or more embodiments, the input may be a mathematical transformation of the raw format. In one or more embodiments, the input may be in a form of an input signal. The hidden layer 206 may learn features that would assist the neural network system 200 to identify an input pattern. As shown, the hidden layer 206 may include a hidden neuron 225 that may be connected to the neurons 212, 213. In one or more embodiments, the neuron 212 may form an excitatory component while the neuron 213 may form an inhibitory component for the hidden neuron 225. But for another hidden neuron 226, the neuron 212 may form an inhibitory component, while the neuron 213 may form an excitatory component.

As shown, the neuron 212 may calculate the sum of the input neurons 214 multiplied by the first set of weights 202, and the neuron 213 may calculate the sum of the input neurons 214 multiplied by the set of weights 203. Corresponding biases 217 may be added to both the neurons 212, 213. An activation function may be performed with the neurons 212, 213 to obtain corresponding outputs to the neurons 225, 226 of the hidden layer 206. In one or more embodiments, the value of the output neuron 226 may be complementary to the value of the output neuron 225.In one or more embodiments, the outputs may in a form of output signals.

The layer of weights 201 may include, but is not limited to, positive values. The layer of weights 201 may be further scaled between 0 and 1. Such scaling may facilitate the mapping the layer of weights 201 on a hardware system as described with reference to FIG 4 below.

The output layer 205, comprising the output neurons 215, 216, may generate a label for the received pattern, where the label indicates an identification of that specific pattern by the neural network system 200. The result of the output neuron 215 may be determined by connected, upstream components of the neural network system 200. As such, a complex function may be formed by adding non-linearity to the neural network system 200 by using the hidden layer 206 with an activation function and/or mathematical rules performed over the neurons 212, 213. In one or more embodiments, the value of the output neuron 216 is complementary to the value of the output neuron 215.

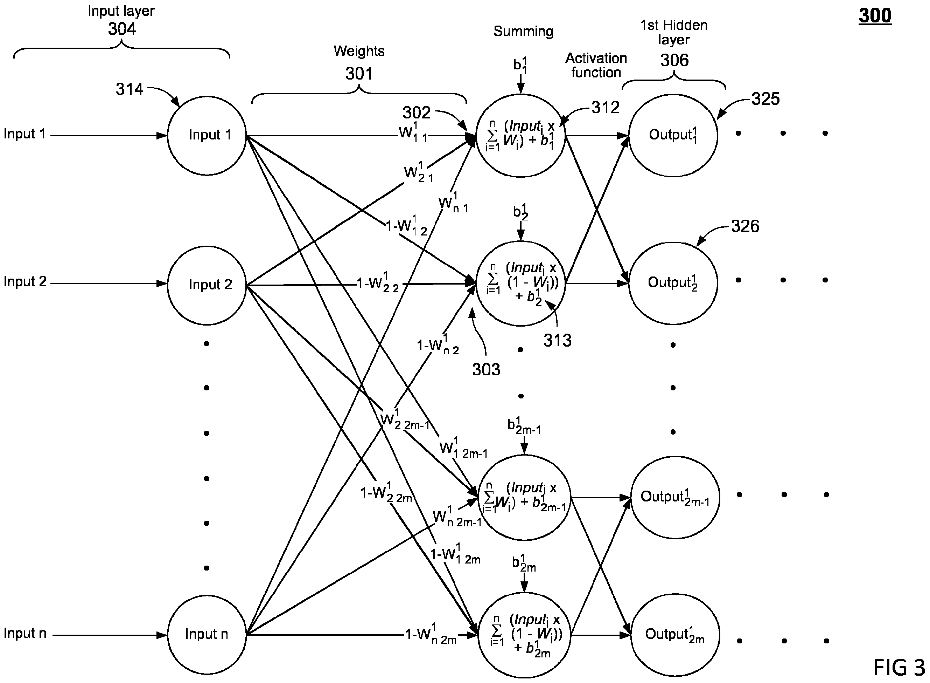

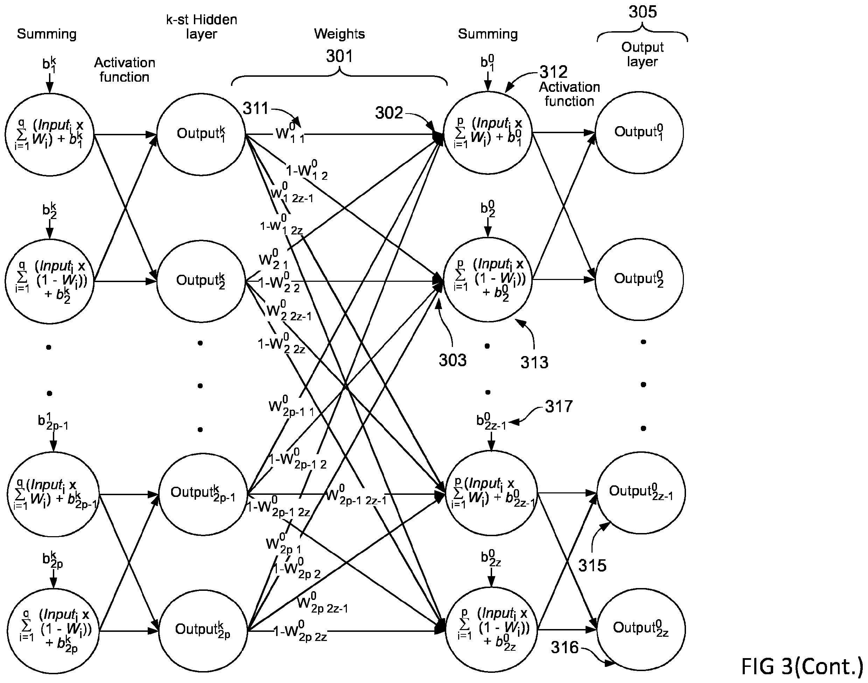

FIG 3 depicts an example of a neural network system 300, based on the principles disclosed herein. The neural network system 300 may be implemented at hardware and/or software levels. As shown, the neural network system 300 incorporates multiple layers of weights 301, each comprising a first set of weights (W) 302, and a set of weights (1-W) 303, where the individual weights may be formed by connections 311. The neural network system 300 incorporates an input layer 304 formed by input neurons 314 and an output layer 305 formed by output neurons 315, 316. The neural network further comprises multiple hidden layers 306 formed by hidden neurons 325, 326 which perform mathematical operations on the first set of weights 302 and for the second set of weights 303, similar to the method of calculating neurons 226 and 225, as shown in FIG. 2. The mathematical operations may further include the corresponding biases 317.

It should be noted that the neural network system 300 may include any number of input neurons (e.g., input neuron 314), any number of hidden layers (e.g., hidden layer 306) with any number of hidden neurons (e.g., hidden neurons 325, 326), and any number of output neurons (e.g., output neurons 315, 316).

An input layer 304 may receive any type of pattern, including but not limited to, image patterns, video patterns, audio patterns, text patterns, and/or any type of organized information. In one or more embodiments, the input may be in a raw format. In one or more embodiments, the input may be a mathematical transformation of the raw format. In one or more embodiments, the input may in a form of an input signal.

The hidden layer 306 (i.e., multiple hidden layers) may learn features of patterns that may assist the neural network system 300 to identify a specific pattern during deployment. As shown, the hidden layer 306 may include a hidden neuron 325 that may be composed of neurons 312, 313. In one or more embodiments, the neuron 312 may form an excitatory component while the neuron 313 may form an inhibitory component. But for another hidden neuron 326, the neuron 312 may form an inhibitory component, while the neuron 313 may form an excitatory component.

As shown, the neuron 312 may calculate the sum of the input neurons 314multiplied by the first set of weights 302, and the neuron 313 may calculate the sum of the input neurons 314 multiplied by the second set of weights 303, for the first hidden layer. For the other hidden layers, the neuron 312 may calculate the sum of the output neurons of the previous hidden layer multiplied by the first set of weights 302, and the neuron 313 may calculate the sum of the output neurons of the previous hidden layer multiplied by the second set of weights 303. Corresponding biases may be added to both the neurons 312,313. An activation function may be performed with the neurons 312, 313 to obtain corresponding outputs to the neurons 325, 326 of the hidden layer 306. In one or more embodiments, the value of the neuron 326 is complementary to the value of the neuron 325.

The output layer 305, comprising the output neurons 315, 316, may generate a label for the received pattern, where the label indicates an identification of that specific pattern identified by the neural network system 300. The result of the output neuron 315, 316 may be determined by connected, upstream components of the neural network system 300. As such, a complex function may be formed by adding non-linearity to the neural network system 200 by using the hidden layers 306 with an activation function and/or mathematical rules performed over the neurons 312, 313. In one or more embodiments, the value of the output neuron 316 is complementary to the value of the output neuron 315. In one or more embodiments, the outputs may be in the form of output signals.

It should be noted that other types of architectures with any number of neurons that can be implemented using a first set of weights 302 and a second set of weights 303, connected to the first set of weights 302 by a mathematical operation (also referred to as a mathematical relationship) should be considered under the scope of this disclosure. In one or more embodiments, the mathematical relationship between the set of weights may be W and 1-W.

FIG 4 depicts an example of a neural network system 400, based on the principles disclosed herein. For instance, the neural network system 400 may be a hardware level implementation of the neural network system 200 shown in FIG. 2. It should be understood that the neural network system 400 is provided as example and should not be considered limiting. That is, neural network systems with additional, alternative, or fewer number of components, should be considered within the scope of this disclosure. The neural network system 400, using the principles disclosed herein, may form one or more layers of a larger hardware based neural. For the hardware-based neural network embodiments, the training may adjust network weights (e.g., formed by memristors).

As shown, the neural network system 400 may include a memristor crossbar 401 formed with column 402 for implementing a first set of weights W, and with column 403 for implementing a second set of weights 1-W that complement the first set of weights W. The columns 402, 403 may be formed memristors 411. The memristor crossbar 401 could contain any kind of memristors, or structures combining memristor with other elements like diodes, transistors, and/or any other type of electronic components. In one or more embodiments, the memristors 411 may include indium gallium zinc oxide (IGZO) memristors, having electrodes situated on a same plane.

The neural network system 400 may further include a bias 417, an input layer 404 formed by input neurons 414, an output layer 405 formed by output neurons 415, 416, and an indicator 418. The neural network system 400 may further include a hidden layer 406, formed by hidden neurons 425, 426, and connections 412 for the first set of weights W and connections 413 for the complementary second set of weights 1-W.

The input layer 404 may receive any type of pattern, including but not limited to, image patterns, video patterns, audio patterns, text patterns, and/or any type of organized information. In one or more embodiments, the input may be in a raw format. In one or more embodiments, the input may be a mathematical transformation of the raw format. The output layer 405 may include output neurons 415, 416 that may generate any type of signal/trigger (and/or a label) identifying a specific pattern sent by the input layer 404. An indicator 418 may indicate the triggering of the output neuron 416.. In one or more embodiments, the value of the output neuron 416 is complementary to the value of the output neuron 415. In one or more embodiments, the value of the output neurons 415, 416 may be dependent on the other upstream, connected components of the neural network system 400.

The connection 412 may perform the summing of the input layer 404, where each input neuron 414 may be multiplied with a weight from the first set of weights W ( as represented in the column 402), while connection 413 may perform the summing of the input layer 404, where each input neuron 414 may be multiplied with a weight from the second set of weights 1-W (as represented in the column 403). To both sums, corresponding biases 417 may be added. In one or more embodiments, the biases may be implemented at the hardware level by adding another row of synaptic weights and applying a constant input on that row.

In one or more embodiments, the resistance values of the memristors 411 from the memristor crossbar 401 may be mapped from a software based neural network system. In one or more embodiments, the resistance values of the memristors 411 may be subsequently updated after each iteration of a training algorithm. For the training, any type of algorithm that is configured to adjusts the weights-e.g., by changing the resistance values of the memristors 411-can be used. It should be noted that the modifying of the resistance values of memristors 411 may be performed by any type of control, regardless of whether the resistance values are mapped to software for the training or whether the training is performed at the hardware level directly. It should be also noted that such resistance values may be configured during a fabrication of the memristor crossbar 401, e.g., in the cases of mapping the values from software.

In one or more embodiments, an output value of a connection 412 may form an excitatory component while the output value of the connection 413 may form an inhibitory component of neuron 426. In one or more embodiments, the output value of the connection 412 may form an inhibitory component while the output value of the connection 413 may form an excitatory component for the neuron 425. The output values of the neuron 425, 426 may depend on the output values of the connections 412,413 over which a mathematical rule, such as an activation function, was performed.

The hidden layer 406, comprising the hidden neurons 416, may improve the performance of the neural network system 400 by adding complexity and non-linearity. For example, the hidden neurons 425, 426 may learn features of the input pattern that may facilitate the neural network system 400 to identify that input pattern.

It should be noted that other types of architectures with any number of neurons that can be implemented using a first set of weights in the column 402 and a second set of weights in the column 403, connected to the first set of weights by a mathematical operation (also referred to as mathematical relationship) should be considered under the scope of this disclosure. In one or more embodiments, the mathematical relationship between the set of weights may be W and 1-W.

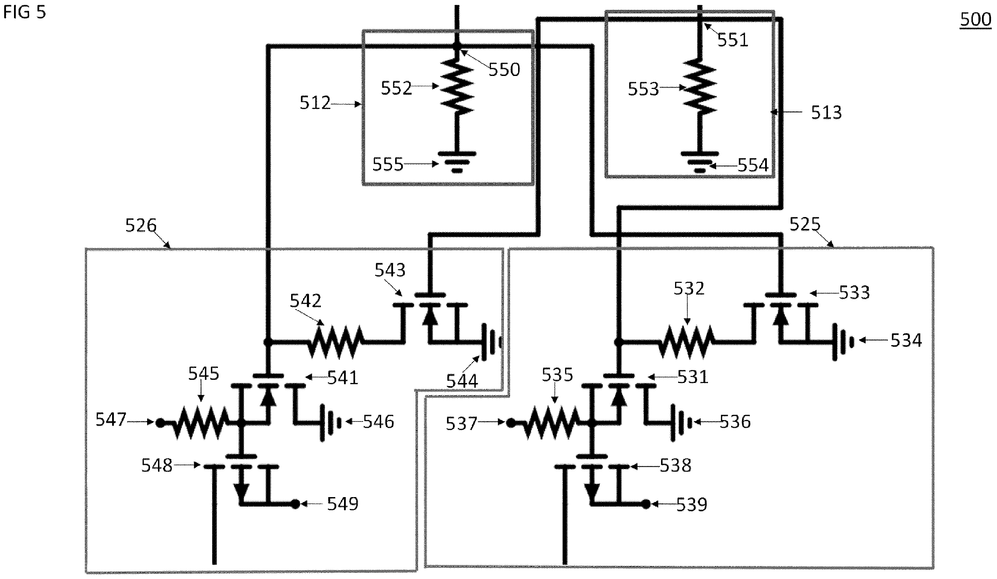

FIG 5 depicts an example of an internal structure of a hidden layer 500 (e.g., hidden layer 406 shown in FIG. 4), based on the principles disclosed herein. The hidden layer may comprise neurons 525, 526, and current summing neurons 512, 513. In one or more embodiments, the hidden layer 500 may be implemented at the hardware level. It should be noted that this is just an example of an internal structure of the hidden layer 500 and other structures-with additional, alternate, or fewer number of components-may be used.

As shown, a neuron 525 comprises resistances 532, 535, transistors 533, 531, 538, ground references 534, 536, and voltage references 539, 537. A neuron 526 comprises resistances 542, 545, transistors 543, 541, 548, ground references 544, 546, and voltage references 549, 547. The current summing neuron 512 comprises a resistance 552, a ground reference 555, and a wire node 550. The current summing neuron 513 comprises a resistance 553, a ground reference 554, and a wire node 551.

The neurons 525, 526 may perform a mathematical rule (or operation) over the current summing neurons 512, 513, respectively. In one or more embodiments, the neuron 525 may consider the current summing neuron 513 as an excitatory component and the current summing neuron 512 as an inhibitory component, while the neuron 526 may consider the current summing neuron 513 as an inhibitory component and the current summing neuron 512 as an excitatory component.

In one or more embodiments, the value from the current summing neuron 512 may be transmitted on transistors 541, 533, while the values from the current summing neuron 513 may be transmitted on transistors 543.531. The transistor 543, together with the resistor 542 and ground 544, may form the inhibitory component and the transistors 541, 548 together with the resistor 545, ground 546 and voltage references 547,549, may form the excitatory component of the neuron 526, while the transistor 533, together with the resistor 532 and ground 534, may form the inhibitory component and the transistors 531, 538 together with the resistor 535, ground 536 and voltage references 537,539, may form the excitatory component of the neuron 525.

In one or more embodiments, the neuron 526 may be a complement of the neuron 525, e.g., when one is turned off, the other is turned on. This complementarity may be achieved because if the value of the current summing neuron 512 is high enough (e.g., above a threshold), then the transistor 533, using the resistance 532, may inhibit the transistor 531, such that the transistor 538 would not be open, causing the neuron 525 to be turned off, but the transistor 541 may be open, therefore, the transistor 548 would be open, causing the neuron 526 to be turned on. Similarly, when the value of the current summing neuron 513 is high enough, the transistor 543 using the resistance 542 may inhibit transistor 541, such that the transistor 548 would not be open, causing the neuron 526 to be turned off, but the transistor 531 may be open, and therefore, the transistor 538 would be open, causing the neuron 525 to be turned on.

The ground references 534, 544, 536, 546, and voltage references 537, 547, 539, 549, and resistances 535, 545 may allow to adjust the functionality of a neuron (e.g., neurons 525, 526) as a whole.

The functionality of these transistors may depend on their type and the values from the current summing neurons 512, 513. For instance, the transistors 543, 541, 548 combinedly may function as an activation function for the neuron 526. Similarly, the transistors 533, 531, 538 combinedly may function as an activation function for the neuron 525. The corresponding activation functions may achieved by performing a mathematical rules with the current summing neurons 512, 513.

In one or more embodiments, a layer of hidden neurons, such as those in the hidden layer 500, may be also used for an output layer. Such output layer may include an indicator similar to 418, which may indicate that the corresponding neural network system has recognized the pattern. In one or more embodiments, the neuron 525 may identify a pattern while the neuron 526 may identify the inverse of a pattern.

It should be noted that this type of artificial neuron should not be considered limiting and other neurons with fewer, more, or other types of components and or functionalities should be considered within the scope of this disclosure.

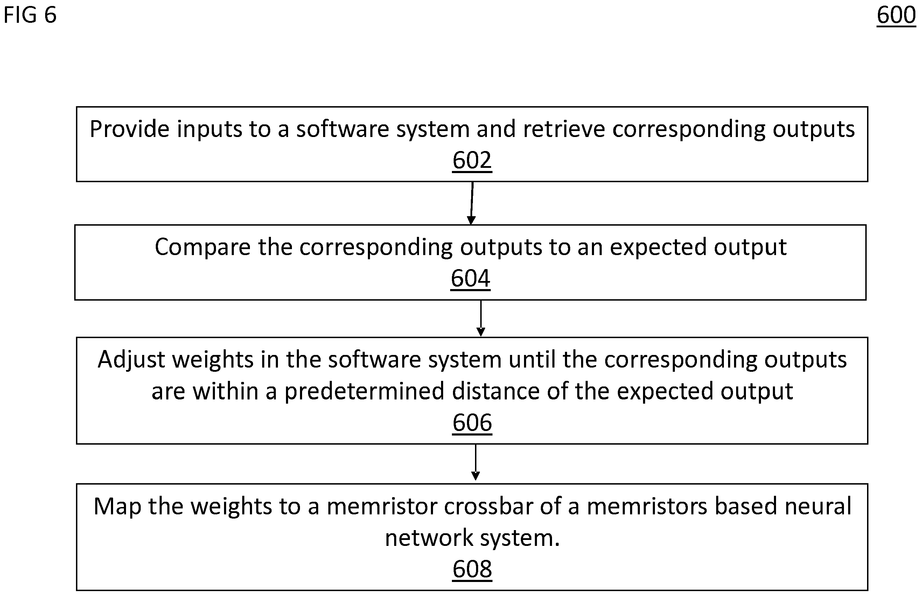

FIG. 6 depicts a flow diagram of an example method 600 of training a memristors based neural network system, based on the principles disclosed herein. The method 600 may follow a software based approach of training the memristors based neural network system. It should be understood that the steps of the method 600 are just examples and not limiting. Therefore, methods with additional, alternative, or additional number of steps should be considered within the scope of this disclosure.

The method may begin at step 602, where inputs are provided to a software system and corresponding outputs are retrieved. The software system may comprise a software analogue of the memristors based neural network system where the individual weights may be initialized and subsequently adjusted in software.

At step 604, the corresponding outputs may be compared with an expected output. The expected output may represent the correct output and the training steps may have to lead to the software system approaching the correct output.

At step 606, the weights of the software system may be adjusted until the corresponding outputs are within a predetermined distance of the expected output. The adjustment can be performed using any type of training algorithm, such as backpropagation.

At step 608, the weights of the software system may be mapped to a memristor crossbar of the memristors based neural network system. The mapping may include adjusting the resistances of individual memristors within the memristor crossbar to correspond to the weights of the software system. After the mapping, the memristors based neural network system is trained and ready for testing.

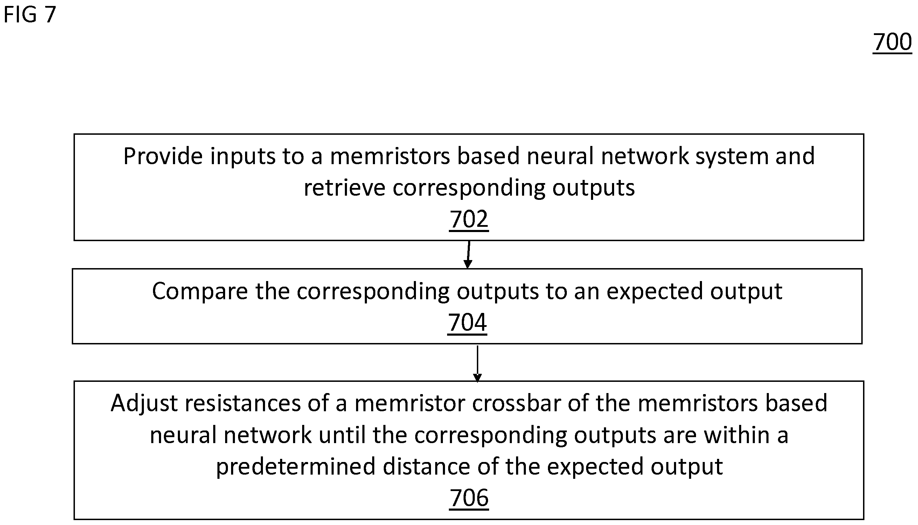

FIG. 7 depicts a flow diagram of an example method 700 of training a memristors based neural network system, based on the principles disclosed herein. The method 700 may follow a hardware based approach of training the memristors based neural network system. It should be understood that the steps of the method 700 are just examples and not limiting. Therefore, methods with additional, alternative, or additional number of steps should be considered within the scope of this disclosure.

The method may begin at step 702, where inputs are provided to the memristors based neural network system and corresponding outputs are retrieved. The corresponding outputs may be determined by the current resistance values within the memristor crossbar. In the subsequent steps, the resistance values may be changed iteratively.

At step 704, the corresponding outputs are compared to an expected output. The expected output may represent the correct output and the training steps may lead the neural network system approaching the correct output.

At step 706, the resistance values within the memristor crossbar are adjusted until the corresponding outputs are within a predetermined distance of the expected output. Once this condition is reached, the memristors based neural network system is trained and ready for testing.

Additional examples of the presently described method and device embodiments are suggested according to the structures and techniques described herein. Other non-limiting examples may be configured to operate separately or can be combined in any permutation or combination with any one or more of the other examples provided above or throughout the present disclosure.

It will be appreciated by those skilled in the art that the present disclosure can be embodied in other specific forms without departing from the spirit or essential characteristics thereof. The presently disclosed embodiments are therefore considered in all respects to be illustrative and not restricted. The scope of the disclosure is indicated by the appended claims rather than the foregoing description and all changes that come within the meaning and range and equivalence thereof are intended to be embraced therein.

It should be noted that the terms "including" and "comprising" should be interpreted as meaning "including, but not limited to". If not already set forth explicitly in the claims, the term "a" should be interpreted as "at least one" and "the", "said", etc. should be interpreted as "the at least one", "said at least one", etc. Furthermore, it is the Applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A neural network system comprising :
an input layer configured to receive an input signal;
a first set of weights and a second set of weights, both downstream of the input layer, the second set of weights being connected by a mathematical relationship with the first set of weights; and
an output layer, downstream of the first set of weights and the second set of weights, and configured to generate an output signal in response to the input signal.

2. The neural network system of claim 1, comprising:
one or more hidden layers, each hidden layer being formed by one or more neurons, each neuron comprising a first component and a second component, the first component configured to function as an excitatory component and the second component configured to function as an inhibitory component.

3. The neural network system of claim 1, the output layer comprising one or more neurons, each comprising a first component and a second component, the first component configured to function as an excitatory component and the second component configured to function as an inhibitory component, optionally, a first neuron of the one or more neurons being configured to detect an input pattern and a second neuron of the one or more neurons being configured to detect an inverse of the input pattern.

4. The neural network system of claim 1, the mathematical relationship comprising at least one weight in the first set of weights having a value W and at least one weight in the second set of weights having a value 1-W.

5. The neural network system of claim 1, the first set of weights and the second set of weights comprising positive values.

6. The neural network system of claim 1, the first set of weights and the second set of weights comprising values scaled between 0 and 1.

7. The neural network system of claim 1, comprising:
at least one memristor crossbar comprising a plurality of memristors and implementing the first set of weights and the second set of weights.

8. The neural network system of claim 7, the plurality of memristors comprising Indium gallium zinc oxide (IGZO) based memristors.

9. The neural network system of claim 7, the plurality of memristors having corresponding electrodes situated on the same plane.

10. The neural network system of claim 7, comprising neurons being formed with electronic components, optionally the neurons each comprising two components, a first component configured to function as an excitatory portion and a second component configured to function as an inhibitory portion.

11. The neural network system of claim 7, comprising at least a hidden layer being formed by neurons with electronic components.

12. The neural network system of claim 11, the neurons each comprising two components, a first component configured function as an excitatory portion and a second component configured to function as an inhibitory portion.

13. A neural network system of claim 11, the output layer comprising a first neuron and a second neuron, the first neuron configured to identify a pattern from the input signal and the second neuron configured to identify an inverse of the pattern.

14. A neural network system of claim 7, the first set of weights having a value W and the second set of weights having a complementary value 1-W.

15. A method of training a memristors based neural network system, the method comprising:
providing inputs to a software system and retrieving corresponding outputs;
comparing the corresponding outputs to an expected output;
adjusting weights in the software system until the corresponding outputs are within a predetermined distance of the expected output; and
mapping the weights to a memristor crossbar of the memristors based neural network system.

16. A method of training a memristors based neural network system, the method comprising:
providing inputs to the memristors based neural network system and retrieving corresponding outputs;
comparing the corresponding outputs to an expected output; and
adjusting resistances of a memristor crossbar of the memristors based neural network system until the corresponding outputs are within a predetermined distance of the expected output.

17. The method of claim 15 or 16, further comprising:
testing the memristors based neural network system by providing additional inputs.
